# EUROPÄISCHE PATENTSCHRIFT

(11) **EP 0 513 721 B1**
(45) Veröffentlichungstag und Bekanntmachung des Hinweises auf die Patenterteilung: **22.07.1998**
(21) Anmeldenummer: 92107938.0
(22) Anmeldetag: 11.05.1992
(51) Int. Cl.: G05D 23/19, F24C 7/08

(54) **Verfahren und Vorrichtung zur Steuerung eines Back-/Bratvorgangs**
Baking/frying control method and apparatus
Procédé et appareil de régulation d'un cycle de cuisson/friture

(30) Priorität: 11.05.1991 DE 4115489
(43) Veröffentlichungstag der Anmeldung: 19.11.1992
(73) Patentinhaber: Miele & Cie. GmbH & Co., D-33325 Gütersloh (DE)
(72) Erfinder: Krümpelmann, Thomas, Dr., W-4830 Gütersloh (DE); Sillmen, Ulrich, Dr., W-4830 Gütersloh (DE); Langemeier, Sigrid, W-4937 Lage/Ehrentrup (DE); Stroop, Hubert, W-4830 Gütersloh (DE)

(56) Entgegenhaltungen:
- DE-A- 3 313 957
- FR-A- 2 633 482
- IEEE TRANSACTIONS ON INDUSTRY AND GENERAL APPLICATIONS Bd. 24, Nr. 4 , Juli 1988 , NEW YORK US Seiten 607 - 612 PAYNE 'A Novel Approach for Detremining Temperature in an Appliance Without Using a Sensor'

## Beschreibung

Die Erfindung betrifft ein Verfahren zur Steuerung eines Back-/Bratvorgangs in einem Backofen mit einer Vorrichtung zur Beendigung des Back-/Bratvorgangs bei Erreichen eines einstellbaren Endwertes, wie Back-/Bratdauer oder Endkerntemperatur, sowie mit einer Vorrichtung zum Abschalten der Heizenergie vor Erreichen des eingestellten Endwertes.

Außerdem betrifft die Erfindung eine Vorrichtung zur Durchführung dieses Verfahrens in einem Backefen mit einer Backmuffel, mit Heizelementen, mit einem Bedienfeld mit Drehwahlschaltern und/oder Druckschaltern, und mit einer Mikroprozessorsteuerung.

Es ist bei Backöfen allgemein bekannter Stand der Technik, diese mit einer Zeitschaltuhr oder mit einem Kerntemperatursensorspieß auszustatten. Bei solchen Backöfen kann der Benutzer einen Endwert, eine Zeit oder eine Temperatur, einstellen. Danach muß der Back-/Bratvorgang nur noch gestartet werden. Eine Kontrolle des Back-/Bratgutes erübrigt sich, die Abschaltung der Heizenergie erfolgt automatisch.

Da eine Backmuffel gut wärmeisoliert ist, wird die durch die Heizelemente des Backofens erzeugte Temperatur auch nach dem Abschalten der Heizenergie noch eine ganze Weile aufrechterhalten. Es wird angestrebt, diese "Restwärme" bei einem Back-/Bratvorgang zu nutzen und die Zufuhr von Heizenergie bereits vor Erreichen des vom Benutzer eingestellten Endwertes zu unterbrechen.

Aus der DE-PS 33 13 957 ist eine Steuereinrichtung bekannt, welche die Heizenergie bei einem Back-/Bratvorgang unabhängig von der vom Benutzer eingestellten Gesamtgarzeit eine festgesetzte Zeitspanne vor Ablauf dieser Gesamtgarzeit zu-/abschaltet. Als gebräuchliche Zeitspanne wird hier ein Wert von 30 min beschrieben. Ein großer Nachteil dieser Steuereinrichtung besteht darin, daß sie nicht die unterschiedliche Dauer von Back-/Bratvorgängen - z. B. Biskuitteig 10 min , Rinderbraten 90 min - berücksichtigt. Außerdem ist eine solche Steuereinrichtung nicht in Backöfen einsetzbar, bei welchen der Benutzer als Abschaltkriterium eine mit einem Temperatursensorspieß gemessene Kerntemperatur einstellt.

Die FR-A-2 633 482 beschreibt ein Verfahren und eine Vorrichtung zum vorzeitigen Abschalten einer Heizung eines Kochfeldes in Verbindung mit dem Messen einer Topftemperatur. Die Topftemperatur wird als unmittelbare Folge des Heizkörperbetriebes an der Topfaußenseite gemessen. Ausgangszustand dazu ist ein Heizkörper im Dauerbetrieb (Ankochstoß). Dann wird ermittelt, wann die Heizung in den getakteten Betrieb übergehen muß, um ein Temperaturüberschwingen des Topfes zu vermeiden. Dazu wird aus dem Topftemperatursignalverlauf und dessen Steigung eine Temperatur unterhalb der Zieltemperatur berechnet, bei der die Kochfeldheizung zum ersten Mal seit dem Einschalten abgeschaltet wird. Die Heizung bleibt für eine Zeit ausgeschaltet und der Topf nutzt die Nachwärme des Kochfeldes und die Topftemperatur nähert sich langsam ihrer Zieltemperatur. Es beginnt dann mit getaktetem Heizkörper eine Haltephase unbegrenzter oder gewählter Länge. Ein wesentlicher Nachteil eines derartigen Verfahrens ist darin zu sehen, daß hier nur eine Temperatur, nämlich die Topftemperatur, für die Berechnung der Abschaltzeit der Heizung herangezogen wird. Eine Übertragung dieses Verfahrens für einen Backofen, würde analog dazu entweder allein aus der Backmuffel- oder aus der Gargutkemtemperatur eine Aussage auf den Fertiggarzustand des Gargutes ableiten. Beides ist nicht sinnvoll, weil viele andere Faktoren, wie beispielsweise Größe, Ausgangstemperatur, Zusammensetzung des Gargutes beachtet werden müssen. Überwacht man beispielsweise nur den Gargutkemtemperaturverlauf unabhängig von der Backmuffeltemperatur, so ist die Heizung dauemd eingeschaltet. Erst kurz vor Erreichen der Zielkemtemperatur wird erstmals die Ofenheizung abgeschaltet und dann würde der Gargutkem seinen Zielwert ohne weitere Beheizung erreichen. Die Gargutoberfläche kann dann jedoch bereits völlig verbrannt sein, weil sich die Kemtemperatur nur mit einer extrem großen zeitlichen Verzögerung ändert, aber die Heizung immer weiter arbeitet.

Die GB-A-2 180 963, GB-A-2 175 724 und DE -A-39 32 626 beschreiben jeweils eine Fernsteuerung zur Beeinflussung der Arbeitsweise eines Gerätes, mindestens mit einem Mikrorechner, einer Kontrolleinrichtung und einer Sende-/Empfangseinrichtung, wobei das Gerät und/oder die Femsteuereinrichtung eine Anzeigeeinrichtung aufweisen. Mit einer derart beschriebenen Einrichtung können einzelne Parameter, wie beispielsweise Temperatur oder Zeit überwacht, geprüft oder verändert werden. Keine dieser Veröffentlichungen gibt jedoch Auskunft dahingehend, wie bei einem minimalen Verbrauch an Energie mit einem Garverfahren Gargut unterschiedlichster Form immer exakt in einem Back-/Bratofen fertig gegart werden kann.

Der Erfindung stellt sich somit das Problem ein Verfahren und eine Vorrichtung so zu gestalten und zu optimieren, daß das vom Benutzer gewählte Fertigkriterium des Gargutes in jedem Fall erreicht wird und dabei auf vielseitige Art und Weise zur Energieeinsparung bei Back-/Bratvorgängen beigetragen wird.

Erfindungsgemäß wird dieses Problem durch ein Verfahren mit den im Patentanspruch 1 angegebenen Merkmalen und durch eine Vorrichtung mit den in Patentanspruch 14 angegebenen Merkmalen gelöst. Zweckmäßige Weiterbildungen und Ausgestaltungen ergehen sich aus den nachfolgenden Unteransprüchen.

Die mit der erfindungsgemäßen Ausbildung erreichbaren Vorteile bestehen darin, daß ein Verfahren und eine Vorrichtung zur Einsparung von Energie geschaffen werden, bei welcher einerseits die unterschiedliche Dauer bei Back- und Bratvorgängen berücksichtigt wird und welche andererseits in Geräten einsetzbar sind, bei welchen als Abschaltkriterium für einen automatischen Back-/Bratvorgang sowohl Zeiten als auch Temperaturen einstellbar sind.

Ein Ausführungsbeispiel der Erfindung ist in den Zeichnungen rein schematisch dargestellt und wird nachstehend näher erläutert. Es zeigen:
- Figur 1: eine schematisierte Blockschaltbilddarstellung mit einer Bedienvorrichtung und einer Mikroprozessorsteuerung bei einem erfindungsgemäß ausgestatteten Backofen;
- Figur 2: den Programmablaufplan eines Back-/Bratvorgangs bei einem erfindungsgemäß ausgestatteten Backofen

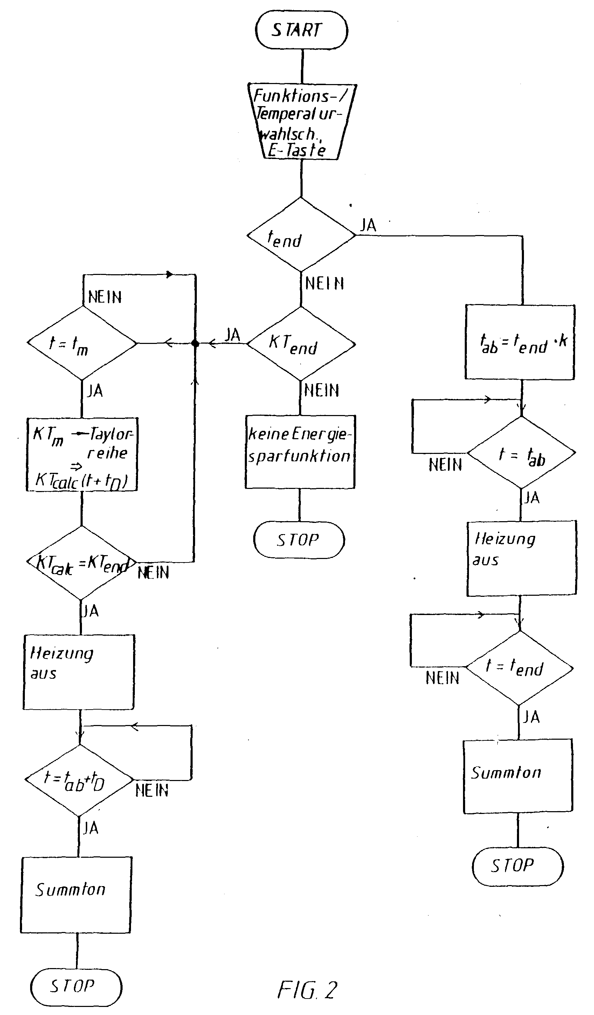

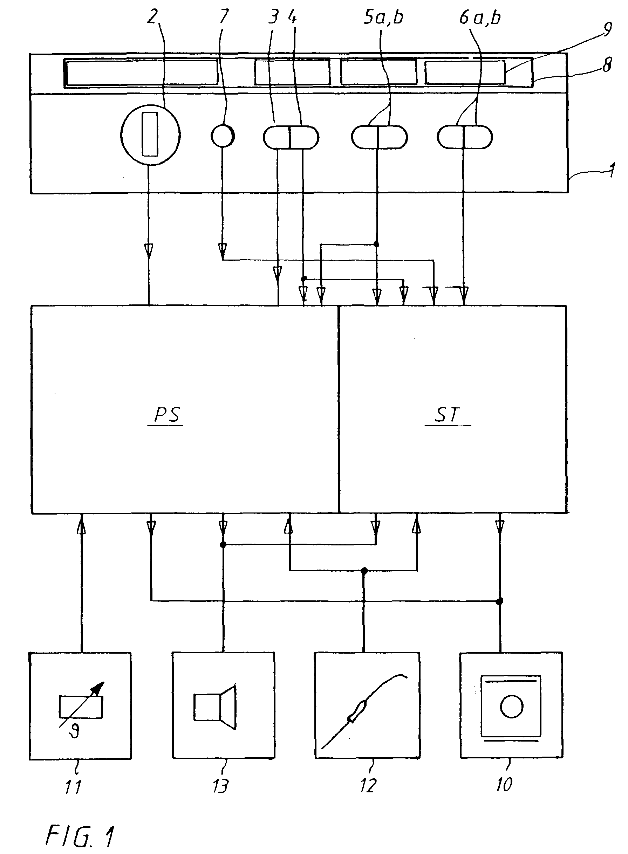

Die in Figur 1 dargestellte Bedieneinrichtung eines erfindungsgemäß ausgestatteten Herdes ist als Bedienfeld (1) ausgebildet. Mit einem Funktionswahlschalter (2) können Funktionen wie z.B Ober-/Unterhitze oder Umluftbeheizung gewählt werden, aber auch Automatikprogramme wie z. B. eine Bratautomatik. Die Wahl der Backmuffeltemperatur erfolgt mit einer Temperaturtaste (3). Daneben sind im Bedienfeld (1) Tasten angeordnet, mit welchen ein Abschaltkriterium zur automatischen Beendigung des Heizvorgangs eingegeben werden kann. Die Eingabe der gewünschten Endkerntemperatur (KT_{end}) erfolgt mit einer Kerntemperaturtaste (4), mit zwei Zeittasten (5a,b) kann eine Anfangszeit und eine Back-/Bratdauer (t_{end}) eingestellt werden. Mit zwei weiteren Tasten (6a,b) ist in einem Bratprogramm die Wahl des Kernzustandes und der Oberflächenbeschaffenheit des Bratens möglich. Übereine Energiespartaste (7) wird eine Steuerschaltung (ST) zur Ausführung einer Energiesparfunktion aktiviert. Den verschiedenen Bedienelementen sind Anzeigen (8) in einer Anzeigeleiste zugeordnet.

Eine Mikroprozessorsteuerung des Backofens beinhaltet eine Programmsteuerung (PS) und die Steuerschaltung (ST). Die Programmsteuerung (PS) regelt die Temperatur im Backofen durch Ansteuerung der Heizkörper (10) und steuert weitere Vorgänge während des Back-/Bratvorgangs. Hierzu steht sie mit den Sensoren und Verbrauchern des Backofens über Steuerleitungen und Signalleitungen in Verbindung. Zur Erfassung der Backmuffeltemperatur dient ein Thermosensor (11), zur Erfassung der Kerntemperatur ein Temperatursensorspieß (12). Das Ende des Backvorgangs wird durch ein mit einem Lautsprecher (13) erzeugtes Akustiksignal angekündigt.

Die Steuerschaltung (ST) ist in der Mikroprozessorsteuerung des Herdes integriert angeordnet. Sie wird durch die Energiespartaste (7) aktiviert und berechnet einen Zeitpunkt (t_{ab}) zum Abschalten der Heizenergie, welcher vor dem Erreichen eines eingestellten Endwertes (t_{end},KT_{end}), also vor dem eigentlichen Ende des Back-/Bratvorganges liegt.

Figur 2 zeigt den Programmablauf eines Back-/Bratvorgangs bei eingeschalteter Energiesparfunktion. Dabei werden nur die Aktionen beschrieben, die für die von der Steuerschaltung (ST) ausgeführten Programmschritte relevant sind. Die Funktion der Programmsteuerung (PS) ist aus dem Stand der Technik hinreichend bekannt und soll deshalb nicht näher beschrieben werden.

Die Steuerschaltung (ST) wird durch Drücken der Energiespartaste (7) aktiviert. Zuvor seien mit dem Funktionswahlschalter (2) eine Beheizungsart und mit der Temperaturwahltaste (3) eine Backmuffeltemperatur eingestellt worden. Die Steuerschaltung (ST) überprüft zuerst, welche Taste zur automatischen Beendigung des Back-/Bratprogramms gewählt worden ist.

Wurde zeitgesteuertes Backen/Braten gewählt (Taste 5b), d. h. es wurde eine Back-/Bratdauer gewählt, multipliziert die Steuerschaltung (ST) diese Zeit (t_{end}) mit einem Verkürzungsfaktor (k), welcher kleiner als Eins ist, und ermittelt mit der berechneten Zeit den Abschaltzeitpunkt (t_{ab}). Ist dieser erreicht, wird die Heizenergie abgeschaltet. Nach Ablauf der vom Benutzer eingestellten Zeit (t_{end}) ertönt ein Summton, um das Ende des Back-/Bratvorgangs anzuzeigen.

Der Verkürzungsfaktor (k) kann wahlweise eine Konstante oder eine von der Zeit (t_{end}) der gewählten Back-/Bratdauer abhängige Größe sein. Setzt man beispielsweise bei Zeiten (t_{end}), die unter 10 min liegen, den Verkürzungsfaktor (k) gleich Eins, so wird die Energiesparfunktion bei solch kurzen Back-\Brat-zeiten außer Kraft gesetzt.

Wurde mit der Kerntemperaturtaste (4) eine Endkerntemperatur (KT_{end}) eingestellt, so speichert die Steuerschaltung (ST) die mit dem Temperatursensorspieß (10) gemessenen Werte (KTₘ) zu jeweils diskreten Zeitabschnitten (tₘ) und berechnet die Steigung d/dt und höhere Ableitungen des Kerntemperaturverlaufs nach der Zeit. Dabei ist es sinnvoll, nach der zweiten bzw. dritten Ableitung abzubrechen. Mit diesen Informationen wird durch Bildung einer Taylorreihe der Kerntemperaturverlauf über den aktuellen Zeitpunkt hinaus für ein festgesetztes Zeitintervall (t_{D}) berechnet.

Das Zeitintervall (t_{D}) liegt zwischen 5 und 25 Minuten und ist von der berechneten Gesamtback-/bratdauer abhängig, welche wiederum vom Gewicht des Back-/Bratguts abhängt. Bei einem in den Zeichnungen nicht dargestellten Backofen mit der Möglichkeit einer Gewichtseingabe kann das Zeitintervall (t_{D}) direkt von diesem eingegebenen Gewicht abhängig sein. Bei Anwahl eines Bratautomatikprogramms über den Funktionswahlschalter wird das Zeitintervall (t_{D}) zusätzlich durch die mit den Tasten 6a und b eingegebenen Werte bezüglich Kern- und Oberflächenbeschaffenheit beeinflußt.

Die Steuerschaltung vergleicht den berechneten Kerntemperaturwert (KT_{calc}) mit der eingestellten Endkerntemperatur (KT_{end}). Ist der berechnete Kerntemperaturwert (KT_{calc}) größer als die Endkerntemperatur, so wird die Heizenergie abgeschaltet. Nach Erreichen dieser Temperatur (KT_{end}) ertönt ebenfalls ein Summton, um dem Benutzer das Ende des Back-/Bratvorgangs anzuzeigen.

Es kann eine in den Zeichnungen nicht dargestellte Sicherungsmaßnahme eingebaut werden, bei welchen bei Unterschreiten der Kerntemperatursteigung unter einen Schwellwert die Heizenergie erneut zugeschaltet wird, wenn der gemessene Kerntemperaturwert (KTₘ) um mehr als eine vorgegebene Differenz von ca. 2°C unterhalb der eingestellten Endkerntemperatur (KT_{end}) liegt.

Eine weitere mögliche, in den Zeichnungen nicht dargestellte Sicherungsmaßnahme besteht darin, daß bei einem Abfall der Backmuffeltemperatur unter einen 120°C die Heizenergie erneut eingeschaltet wird, wenn der gemessene Kerntemperaturwert (KTₘ) um mehr als ca. 2°C unterhalb der eingestellten Endkerntemperatur (KT_{end}) liegt.

Ist keine Funktion zur automatischen Beendigung des Backprogramms gewählt worden, erkennt die Steuerschaltung (ST) einen Handbetrieb und führt keine weiteren Programmschritte aus.

## Patentansprüche

1. Verfahren zur Steuerung eines Back-/Bratvorgangs in einem Backofen mit einer ***Mikroprozessorsteuerung, welche eine Programmsteuerung beinhaltet,*** mit einer Vorrichtung zur Beendigung des Back-/Bratvorgangs bei Erreichen eines einstellbaren Endwertes, wie Back-/Bratdauer, sowie mit einer Vorrichtung zum Abschalten der Heizenergie vor Erreichen des eingestellten Endwertes,
dadurch gekennzeichnet,
daß eine Steuerschaltung (ST) ***in Verbindung mit der Programmsteuerung (PS)*** den Abschaltpunkt (t_{ab}) der Heizenergie in Abhängigkeit von Größe und Art ***mindestens ein***es eingestellten Endwertes berechnet.

2. Verfahren nach Anspruch 1,
dadurch gekennzeichnet,
daß die Steuerschaltung (ST) bei Einstellung einer Back-/ Bratdauer (**t**_{end}) als Endwert einen Zeitpunkt (t_{ab}) als Abschaltpunkt durch Multiplikation der Zeit (t_{end}) der eingestellten Back-/Bratdauer mit einem konstanten Verkürzungsfaktor (k) errechnet.

3. Verfahren nach Anspruch 1,
dadurch gekennzeichnet,
daß die Steuerschaltung (ST) bei Einstellung einer Back-/ Bratdauer (**t**_{end}) als Endwert einen Zeitpunkt (t_{ab}) als Abschaltpunkt durch Multiplikation der Zeit (t_{end}) der eingestellten Back-/Bratdauer mit einem von der eingestellten Gardauer abhängigen Verkürzungsfaktor (k) errechnet.

4. Verfahren nach Anspruch 1 unter Verwendung eines Temperatursensorspießes (12)
dadurch gekennzeichnet,
daß die Steuerschaltung (ST) bei Einstellung einer Endkemtemperatur (KT_{end}) aus während des Back-/Bratprozesses zu jeweils diskreten Zeitabschnitten (tₘ) gemessenen Kemtemperaturwerten (KTₘ) den weiteren Verlauf der Kemtemperatur und aus diesem Verlauf den Abschaltpunkt (**t**_{ab}) der Heizenergie berechnet.

5. Verfahren nach Anspruch 4,
dadurch gekennzeichnet,
daß die Steuerschaltung (ST) den weiteren Verlauf der Kemtemperatur für einen vorbestimmbaren Zeitraum (t_{D}) durch Bildung einer mathematischen Reihe mit den gemessenen Kemtemperaturwerten (KTₘ) berechnet und die Heizenergie abschaltet, wenn die eingestellte Endkemtemperatur (KT_{end}) innerhalb des Zeitraums (**t**_{D}) erreicht wird.

6. Verfahren nach Anspruch 5,
dadurch gekennzeichnet,
daß der Zeitraum (t_{D}) in Abhängigkeit von einem vom Benutzer einzugebenden Gargutgewicht bestimmbar ist.

7. Verfahren nach Anspruch 5,
dadurch gekennzeichnet,
daß der Zeitraum (t_{D}) in Abhängigkeit von der berechneten Gesamtback-/bratdauer bestimmbar ist.

8. Verfahren nach Anspruch 5,
dadurch gekennzeichnet,
daß der Zeitraum (t_{D}) in Abhängigkeit von einer vom Benutzer einzugebenden Kem- und/oder Oberflächenbeschaffenheit bestimmbar ist.

9. Verfahren nach einem der Ansprüche 5 bis 8,
dadurch gekennzeichnet,
daß der vorbestimmbare Zeitraum (t_{D}) innerhalb eines festgesetzten Intervalls, vorzugsweise zwischen 5 und 25 Minuten liegt.

10. Verfahren nach einem der Ansprüche 4 bis 9,
dadurch gekennzeichnet,
daß bei Unterschreiten der Steigung der gemessenen Kerntemperaturwerte (KTₘ) unter einen Schwellwert die Heizenergie erneut zugeschaltet wird, wenn der gemessene Kemtemperaturwert (KTₘ) um mehr als eine vorgegebene Differenz, vorzugsweise 2 C unterhalb der eingestellten Endkemtemperatur (KT_{end}) liegt.

11. Verfahren nach einem der Ansprüche 1 bis 10,
dadurch gekennzeichnet,
daß bei einem Abfall der Backmuffeltemperatur unter einen festgelegten Wert, vorzugsweise 120 C, die Heizenergie emeut eingeschaltet wird, wenn der gemessene Kemtemperaturwert (KTₘ) um mehr als eine vorgegebene Differenz, vorzugsweise 2 C unterhalb der eingestellten Endkemtemperatur (KT_{end}) liegt.

12. Verfahren nach einem oder mehreren der Ansprüche 1 bis 11,
dadurch gekennzeichnet,
daß die Steuerschaltung (ST) durch eine Energiespartaste (7) aktiviert wird.

13. Verfahren nach einem oder mehreren der Ansprüche 1 bis 12,
dadurch gekennzeichnet,
daß nach Beendigung des Back-/Bratvorgangs ein optisches oder akustisches Signal erfolgt.

14. Vorrichtung zur Durchführung des Verfahrens nach einem oder mehreren der Ansprüche 1 bis 13 in einem Backofen mit einer Backmuffel, mit Heizelementen (10), mit einem Bedienfeld (1) mit Drehwahlschaltem und/oder Druckschaltem, und mit einer Mikroprozessorsteuerung,
gekennzeichnet durch eine Steuerschaltung (ST), mit welcher der Abschaltpunkt der Heizenergie in Abhängigkeit von Größe und Art des eingestellten Endwertes berechenbar ist.

15. Vorrichtung nach Anspruch 14,
dadurch gekennzeichnet,
daß die Steuerschaltung (ST) Bestandteil der Mikroprozessorsteuerung ist **und mit Auswahlschaltern (4, 5a,b und/oder 6a,b) sowie einem Energiesparschalter (7) verbunden** ist.

## Claims

1. Method of controlling a baking/roasting operation in an oven provided with a microprocessor control, which includes a program control, with an apparatus for terminating the baking/roasting operation when a settable end value is reached, such as the baking/roasting duration, and with an apparatus for switching-off the heating energy prior to the set end value being reached, characterised in that a control circuit (ST), in conjunction with the program control (PS), calculates the switch-off point (t_{ab}) for the heating energy in dependence on the magnitude and type of at least one set end value.

2. Method according to claim 1, characterised in that, if a baking/roasting duration (t_{end}) is set as the end value, the control circuit (ST) calculates a point in time (t_{ab}) as the switch-off point by multiplying the time (tend) of the set baking/roasting duration with a constant shortening factor (k).

3. Method according to claim 1, characterised in that, if a baking/roasting duration (t_{end}) is set as the end value, the control circuit (ST) calculates a point in time (t_{ab}) as the switch-off point by multiplying the time (t_{end}) of the set baking/roasting duration with a shortening factor (k) which is dependent on the set cooking period.

4. Method, according to claim 1, employing a temperature sensor rod (12), characterised in that, if an end core temperature (KT_{end}) is set, the control circuit (ST) calculates the further development of the core temperature from core temperature values (KTₘ) which are measured during the baking/roasting process at respective discrete intervals of time (tₘ) and calculates the switch-off point (t_{ab}) for the heating energy from this development.

5. Method according to claim 4, characterised in that the control circuit (ST) calculates the further development of the core temperature for a predeterminable period (t_{D}) by forming a mathematical series with the measured core temperature values (KTₘ) and switches-off the heating energy when the set end core temperature (KT_{end}) is reached within the period (t_{D}).

6. Method according to claim 5, characterised in that the period (t_{D}) is determinable in dependence on a food weight which is to be input by the user.

7. Method according to claim 5, characterised in that the period (t_{D}) is determinable in dependence on the calculated total baking/roasting duration.

8. Method according to claim 5, characterised in that the period (t_{D}) is determinable in dependence on a core quality and/or surface quality which is to be input by the user.

9. Method according to one of claims 5 to 8, characterised in that the predeterminable period (t_{D}) lies within a fixed interval, preferably between 5 and 25 minutes.

10. Method according to one of claims 4 to 9, characterised in that, if the increase in the measured core temperature values (KTₘ) falls below a threshold value, the heating energy is switched-on again when the measured core temperature value (KTₘ) lies below the set end core temperature (KT_{end}) by more than one prescribed difference, preferably 2° C.

11. Method according to one of claims 1 to 10, characterised in that, if the baking muffle temperature drops below a fixed value, preferably 120° C, the heating energy is switched-on again when the measured core temperature value (KTₘ) lies below the set end core temperature (KT_{end}) by more than one prescribed difference, preferably 2° C.

12. Method according to one or more of claims 1 to 11, characterised in that the control circuit (ST) is activated by an energy saving key (7).

13. Method according to one or more of claims 1 to 12, characterised in that a visual or acoustic signal is generated after the baking/roasting operation has terminated.

14. Apparatus for accomplishing the method according to one or more of claims 1 to 13 in an oven provided with a baking muffle, with heating elements (10), with a control panel (1) provided with rotary selector switches and/or pressure switches, and with a microprocessor control, characterised by a control circuit (ST), by means of which the switch-off point for the heating energy can be calculated in dependence on the magnitude and type of the set end value.

15. Apparatus according to claim 14, characterised in that the control circuit (ST) is a component part of the microprocessor control and is connected to selector switches (4, 5a,b and/or 6a,b) and to an energy saving switch (7).

## Revendications

1. Procédé pour commander une opération de cuisson/rôtissage dans un four commandé par un microprocesseur muni d'une commande à programme, à l'aide d'un dispositif pour arrêter l'opération de cuisson/rôtissage lorsqu'une valeur finale réglable est atteinte, par exemple la durée de cuisson/rôtissage, et d'un dispositif pour couper l'énergie de chauffage avant que la valeur finale réglée ne soit atteinte, caractérisé en ce qu'un circuit de commande (ST) calcule, en liaison avec la commande à programme (PS), le point de coupure (t_{ab}) de l'énergie de chauffage en fonction de la valeur et du type d'au moins une valeur finale réglée.

2. Procédé selon la revendication 1, caractérisé en ce que, lors du réglage d'une durée de cuisson/rôtissage (t_{end}) comme valeur finale, le circuit de commande (ST) calcule en tant que point de coupure un instant (t_{ab}), en multipliant le temps (t_{end}) de la durée de cuisson/rôtissage réglée par un facteur de raccourcissement contant (k).

3. Procédé selon la revendication 1, caracténsé en ce que, lors du réglage d'une durée de cuisson/rôtissage (t_{end}) comme valeur finale, le circuit de commande (ST) calcule en tant que point de coupure un instant (t_{ab}), en multipliant le temps (t_{end}) de la durée de cuisson/rôtissage réglée par un facteur de raccourcissement contant (k) dépendant de la durée de cuisson réglée.

4. Procédé selon la revendication 1 mettant en oeuvre une broche faisant office de capteur de température (12), caractérisé en ce que, lors du réglage d'une température interne finale du plat à cuire (KT_{end}), le circuit de commande (ST) calcule l'évolution de la température interne à partir de valeurs de température interne (KTₘ) mesurées à intervalles discrets (tₘ) au cours de l'opération de cuisson/rôtissage, et le point de coupure (t_{ab}) de l'énergie de chauffage à partir de cette évolution.

5. Procédé selon la revendication 4, caracténsé en ce que le circuit de commande (ST) calcule l'évolution de la température interne pour une période de temps (t_{D}) pouvant être préalablement définie en formant une séne mathématique avec les valeurs de température interne mesurées (KTₘ) et coupe l'énergie de chauffage lorsque la température interne finale réglée (KT_{end}) est atteinte pendant ladite période (t_{D}).

6. Procédé selon la revendication 5, caracténsé en ce que la période de temps (t_{D}) peut être déterminée en fonction du poids du plat à cuire que l'utilisateur doit entrer.

7. Procédé selon la revendication 5, caractérisé en ce que la pénode de temps (t_{D}) peut être déterminée en fonction du temps de cuisson/rôtissage calculé.

8. Procédé selon la revendication 5, caracténsé en ce que la période de temps (t_{D}) peut être déterminée en fonction d'une propriété superficielle et/ou interne que l'utilisateur doit entrer.

9. Procédé selon l'une des revendications 5 à 8, caractérisé en ce que la période de temps (t_{D}) pouvant être préalablement définie se situe dans un intervalle de temps défini et est de préférence comprise entre 5 et 25 minutes.

10. Procédé selon l'une des revendications 4 à 9, caracténsé en ce que, lorsque la progression des valeurs de température interne mesurées (KTₘ) devient inféneure à une valeur seuil, l'énergie de chauffage est à nouveau fournie lorsque la valeur de température interne (KTₘ) se situe de plus d'une valeur préalablement définie, de préférence 2°C, en dessous de la température interne finale réglée (KT_{end}).

11. Procédé selon l'une des revendications 1 à 10, caractérisé en ce que lors d'une chute de la température du four sous une valeur définie, de préférence 120°C, l'énergie de chauffage est à nouveau fournie lorsque la valeur de température interne mesurée (KTₘ) se situe de plus d'une valeur préalablement définie, de préférence 2°C, en dessous de la température interne finale réglée (KT_{end}).

12. Procédé selon l'une ou plusieurs des revendications 1 à 11, caractérisé en ce que le circuit de commande (ST) est activé par une touche d'économie d'énergie (7).

13. Procédé selon l'une ou plusieurs des rcvendications 1 à 12, caracténsé en ce que, lorsque l'opération de cuisson/rôtissage est achevée, un signal optique ou acoustique est donné.

14. Dispositif pour mettre en oeuvre le procédé selon l'une ou plusieurs des revendications 1 à 13 dans un four à moufle, comprenant des éléments chauffants (10), un tableau de commande (1) muni de sélecteurs rotatifs ou de boutons-poussoirs, et une commande par microprocesseur, caractérisé par un circuit de commande (ST) permettant de calculer le point de coupure de l'énergie de chauffage en fonction de la valeur et de la nature de la valeur finale réglée.

15. Dispositif selon la revendication 14, caractérisé en ce que le circuit de commande (ST) fait partie de la commande par microprocesseur et est relié aux sélecteurs (4, 5a, b et/ou 6a, b), ainsi qu'à une touche d'économie d'énergie (7).
